# EUROPÄISCHE PATENTSCHRIFT

(11) **EP 4 613 961 B1**
(45) Veröffentlichungstag und Bekanntmachung des Hinweises auf die Patenterteilung: **01.07.2026**
(21) Anmeldenummer: 25153555.5
(22) Anmeldetag: 23.01.2025
(51) Int. Cl.: E05F 11/34, E05F 15/63

(54) **ELEKTROMOTORISCHER KLAPPENANTRIEB FÜR GEBÄUDEÖFFNUNGEN MIT NOTANTRIEBSFUNKTION**
ELECTRIC MOTOR-OPERATED FLAP DRIVE FOR ARCHITECTURAL OPENINGS WITH EMERGENCY DRIVE FUNCTION
COMMANDE DE VOLET À MOTEUR ÉLECTRIQUE POUR OUVERTURES DE BÂTIMENTS AVEC FONCTION D'ENTRAÎNEMENT D'URGENCE

(30) Priorität: 08.03.2024 DE 202024101143 U
(43) Veröffentlichungstag der Anmeldung: 10.09.2025
(73) Patentinhaber: D+H Mechatronic AG, 22949 Ammersbek (DE)
(72) Erfinder: WITTMAACK, Helko, 22889 Tangstedt (DE)
(74) Vertreter: Raffay & Fleck

(56) Entgegenhaltungen:
- US-A- 5 493 813
- US-A- 5 711 360

## Beschreibung

Die vorliegende Erfindung betrifft einen elektromotorischen Klappenantrieb für Gebäudeöffnungen.

In Gebäuden sind typischerweise Gebäudeöffnungen vorgesehen die mit hier als "Klappen" bezeichneten Verschlusselementen verschlossen, die aber auch durch ein Bewegen der Klappen geöffnet werden können. Beispiele für solche Gebäudeöffnungen sind Türen, Fenster oder auch spezifische Lüftungs- oder Entrauchungsöffnungen. Im Falle von Türen stellen die zugehörigen Türflügel die Klappen dar, bei Fenstern die Fensterflügel, bei Lüftungs- oder Entrauchungsöffnungen, je nach Einbaulage Lüftungsklappen oder Entrauchungsklappen, oder auch, im Falle von Lüftungs- oder Entrauchungskuppeln, Lüftungs- oder Entrauchungsdeckel. Diese Klappen sind, insbesondere bei der Integration in der Fassade, nach innen oder außen öffnend bekannt.

Neben einer manuellen Betätigung für ein Bewegen der Klappen zum Öffnen bzw. Schließen der Gebäudeöffnung sind solche Ausgestaltungen bekannt, bei denen die Klappen motorisch, insbesondere elektromotorisch, angetrieben bewegt werden können. Hierfür werden dann elektromotorische Klappenantriebe eingesetzt. Derartige elektromotorischen Klappenantriebe kommen z.B. dort zum Einsatz, wo Klappen von Gebäudeöffnungen für ein manuelles Betätigen nicht oder nur sehr schwer zugänglich sind. Sie werden insbesondere auch in großen Gebäuden, wie öffentlichen Gebäuden wir Schulen, Turnhallen und dergleichen, oder auch in Bürogebäuden oder anderen gewerblichen Gebäuden, in denen eine große Zahl von Gebäudeöffnungen vorhanden sind, eingesetzt. Elektromotorische Klappenantriebe sind zudem auch bei solchen Gebäudeöffnungen zum Betreiben der zugehörigen Klappen eingesetzt, die in automatisch gesteuerte Lüftungs- oder Entrauchungssysteme eingebunden sind.

In der EP 2 780 640 B1 ist eine elektromotorisch betriebene Lüftungsklappenantriebseinheit beschrieben, welche stirnseitig im Klappenflügel teilintegriert ist und zum einen mittels Umlaufgetriebeantrieb und Gleitarm den Drehflügel dreht und zum andern mittels zusätzlichem Riegelantrieb ein Riegelbeschlagsystem betätigt.

Ein weiterer elektromotorischer Klappenantrieb mit einem kombinierten Hebelarm-Riegelantrieb ist in der DE 20 2019 105 467 U1 der hiesigen Anmelderin beschrieben.

Alle elektromotorischen Klappenantriebe sowie deren elektrischen Anschlüsse und Leitungen können Fehler aufweisen, die dazu führen, dass ein elektromotorisches Öffnen der Klappe nicht möglich ist. Insbesondere dann, wenn ein solcher elektromotorischer Klappenantrieb zumindest zum Teil in einem Klappenflügel montiert ist, stellt ein für die elektrische Versorgung des Antriebs erforderlicher Kabelübergang zwischen Blendrahmen und Flügel eine zusätzliche mögliche Fehlerquelle dar. Insbesondere bei verdeckt eingebauten Antrieben kann dabei der Zugang zu defekten Komponenten erschwert sein.

Im Falle eines Ausfalls des elektromotorischen Antriebs aufgrund eines aufgetretenen Fehlers sollte ein Öffnen, vorzugsweise auch ein Schließen, der Klappe in einem Notbetrieb ermöglicht sein. Dies sollte vorteilhafterweise mit geringem zeitlichem Aufwand und insbesondere auch ohne die Zerstörung der Klappe und/oder des Antriebs möglich sein.

In der US 5 493 813 A ist eine Möglichkeit offenbart, wie ein elektromotorischer Klappenantrieb über einen manuellen Hilfsantrieb bewegt werden kann, wenn der elektromotorische Antrieb ausfällt. Dort ist ein Gleitarmantrieb gezeigt, der mittels eines motorisch angetriebenen Umlaufgetriebes ein automatisches Öffnen und Schließen von Drehflügeln zu Lüftungszwecken bewirken kann. Dieser verfügt neben dem elektromotorischen Antrieb über einen manuell zu bedienenden Hilfsantrieb, der z.B. bei Netzausfall und elektrischen Fehlern eine Betätigung der Klappe ermöglicht. Dieser Hilfsantrieb ist teilintegriert im Blendrahmen platziert und wird über eine einsteckbare Handkurbel betätigt. Durch die Verwendung eines Umlaufgetriebes ist diese Bauart vergleichsweise kompakt. Da zudem die Motorachse und die Gleitarmachse miteinander fluchten, ist der Antrieb insgesamt gut im Blendrahmen integrierbar bzw. teilintegrierbar. Bei der in der US 5 493 813 A gezeigten Gestaltung des Hilfsantriebs ist allerdings ein Schneckenrad, das ein von der Kurbel aufgebrachtes Drehmoment zum Betätigen des Hilfsantriebs direkt auf den Gleitarm überträgt, fest in dem montierten Antrieb integriert. Der Eingriff zum manuellen Betätigen erfolgt dabei über die letzte abtriebsseitige Getriebeübersetzungsstufe, welche mit einem hohen Drehmoment beaufschlagt wird. Infolgedessen müssen die Komponenten zum manuellen Betätigen entsprechend der Belastung dimensioniert werden und sind entsprechend kostenintensiv und voluminös. Weiterhin erhöht die Schnecke, welche immer im Antrieb erforderlich ist, um das Hohlrad zu arretieren, die Grundkosten des Antriebes.

Hier setzt die Erfindung mir der Aufgabe an, einen elektromotorischer Klappenantrieb für Gebäudeöffnungen mit einer Notantriebsfunktion anzugeben, der einfach aufgebaut, kompakt gebildet und robust ist. Vorzugsweise soll dieser Antrieb zudem möglichst geräuscharm betrieben werden können.

Diese Aufgabe wird erfindungsgemäß gelöst durch einen Klappenantrieb mit den Merkmalen des Anspruchs 1. Besondere und vorteilhafte Weiterbildungen sind in den abhängigen Ansprüchen 2 bis 8 näher ausgeführt. Zudem werden weitere Ausgestaltungsmöglichkeiten, die ihrerseits zu weitergehenden Vorteilen führen können, aus der nachfolgenden Beschreibung deutlich.

Erfindungsgemäß weist ein elektromotorischer Klappenantrieb für Gebäudeöffnungen eine Antriebseinheit und ein von der Antriebseinheit angetriebenes Abtriebsglied auf. Die Antriebseinheit umfasst einen Elektromotor und ein Getriebe. Das Getriebe umfasst seinerseits ein Getriebegehäuse, in dem insbesondere einzelne Elemente des Getriebes aufgenommen und/oder gelagert sein können.

Das Abtriebsglied des erfindungsgemäßen Klappenantriebs beinhaltet eine um ihre Längsachse rotierende Treibstange. Das Getriebe enthält ein Hohlrad mit einer Innenverzahnung. Das Hohlrad rotiert dabei um eine Drehachse, die mit der Längsachse der Treibstange zusammenfällt. An der Innenverzahnung des Hohlrades greift ein an einer Motorwelle des Elektromotors angeordnetes Ausgaberitzel an und übergibt an dieser Stelle das von dem Elektromotor erzeugte Drehmoment in das Getriebe. Die Motorwelle und mit ihr das Ausgaberitzel des Elektromotors rotiert dabei um eine parallel zu der Drehachse des Hohlrads verlaufende, seitlich zu der Drehachse des Hohlrades versetzt liegende Antriebsachse.

Erfindungsgemäß weist der Klappenantrieb ein Antriebsmittel zum alternativen Antreiben des Abtriebsglieds, d.h. ein Antreiben des Abtriebsglieds ohne ein elektrisches Betreiben des Elektromotors, auf. Dieses Antriebsmittel weist einen stabförmigen Kopplungsabschnitt auf, in dem eine zum Angreifen an einem auf der Motorwelle des Elektromotors angeordneten Zahnradelement, bei dem es sich insbesondere um einen Längsabschnitt des Ausgaberitzels handeln kann, ausgebildete Schneckenwelle ausgeformt ist. Weiterhin ist in dem Getriebegehäuse wenigstens eine Öffnung zum Einführen des Kopplungsabschnitts des Antriebsmittels vorgesehen und sind weiterhin Lagermittel vorgesehen in denen der Kopplungsabschnitt derart gelagert werden kann, dass der Kopplungsabschnitt um seine Stablängsachse geführt rotieren kann. Diese Lagermittel sind derart gebildet und positioniert, dass, wenn der Kopplungsabschnitt in das Getriebegehäuse eingeführt und von den Lagermitteln gelagert ist die Stablängsachse die Drehachse, insbesondere senkrecht, schneidet und die Schneckenwelle an dem Zahnradelement kämmend angreift.

Dadurch, dass durch die erfindungsgemäße Lösung die Schneckenwelle des Antriebsmittels für den Notbetrieb, wenn letzteres in das Getriebegehäuse eingeführt direkt mit dem auf der Motorwelle angeordneten Zahnradelement, insbesondere dem Ausgaberitzel, kämmend angeordnet ist, also direkt an dem Motorausgang angreift ist, insbesondere durch die Übersetzung des nachgelagerten Getriebes, lediglich ein geringes Drehmoment für das Betätigen des Antriebsmittels für den Notbetrieb erforderlich, so dass die Baugrößen der für den Notbetrieb erforderlichen Komponenten gering gewählt werden können und mithin eine kompakte Bauform erhalten werden kann.

Eine geringe Baugröße der für den Notbetrieb vorgesehenen Komponenten hat insbesondere die nachfolgend genannten Vorteile:
- Durch den geringen erforderlichen Materialeinsatz lassen sich geringe Kosten erhalten.
- Wenn der Klappenantrieb in der Klappe (dem Flügel) oder auch im Rahmen verdeckt angeordnet wird, für einen Zugang zu der Öffnung in dem dann verdeckt angeordneten Getriebegehäuse also Bohrungen in der Klappe oder dem Rahmen angebracht werden müssen, können diese mit geringem Durchmesser ausgeführt werden. Dies führt dann dazu, dass diese Bohrungen, insbesondere wenn sie auch noch durch einen farblich passenden Abdeckstopfen kaschiert werden, optisch nicht, allenfalls nur geringfügig auffallen.
- Das Drehmoment welches zum Betätigen des Antriebsmittels für den Notbetrieb aufgebracht werden muss, z.B. über ein Werkzeug, kann gering ausfallen. Z.B. kann ein solches Drehmoment über eine Standard-Akkubohr- oder - schraubmaschine aufgebracht werden oder auch direkt mittels eines kleinen Elektromotors, auf dessen Welle der das Antriebsmittel mit dem Kopplungsabschnitt einfach z.B. unter Einsatz eines Welle-Nabe Klebers befestigt wurde und dessen Energieversorgung über handelsübliche Primärbatterien erfolgen kann. Der Vorteil eines solchen kleinen Elektromotors ist, dass die Drehrichtung durch die feste Verdrahtung stets vorgegeben sein kann, sodass beim Betätigen des Antriebsmittels für den Notbetrieb dieses nicht versehentlich in die falsche Richtung gedreht werden kann. In einem solchen mit dem Antriebsmittel gekoppelten Elektromotor könnte auch eine Elektronik oder ein einfacher Widerstand das Drehmoment begrenzen. Die Verwendung einer Standard-Akkubohr- oder -schraubmaschine hingegen hat den Vorteil, dass ein solches Werkzeug in der Regel in einem Standardwerkzeugsatz eines Monteurs, der die Instandsetzung durchführt, vorhanden ist. Bei Verwendung eines solchen Standardwerkzeuges könnte in dem Antriebsmittel ein von der Wirkweise zum dem Kopplungsabschnitt mit der Schneckenwelle in Reihe geschalteter Freilauf das Drehen in die falsche Richtung verhindern.

Eine Platzierung der Schneckenwelle des Antriebsmittels für den Notbetrieb in einem Bereich zwischen dem Elektromotor und dem Getriebe hat ferner folgende Vorteile:
- Ein Motorgetriebeflansch zur Anbindung des Elektromotors an das Getriebe ist ein ohnedies, d.h. auch ohne das Vorsehen eines Notbetriebs erforderliches Bauteil. Durch das Einbinden einer Notbetriebsfunktion wird daher kein allenfalls geringer, zusätzlicher Bauraum benötigt und die zusätzlichen Kosten, um die Komponenten für den Notbetrieb vorzusehen, fallen gering aus.
- Die meisten kleinen Elektromotoren haben nur auf einer Längsseite Bohrungen und einen Präzisionsflansch, um den Elektromotor am Getriebe befestigen zu können. Auf dieser Seite sind in der Regel auch keine ggf. störenden oder zu fixierenden Kabel angeordnet. Dadurch ist eine Platzierung des Antriebsmittels für den Notbetrieb auf dieser einen Seite gut zu verwirklichen, ist eine solche Platzierung auf der gegenüberliegenden Längsseite des Elektromotors oft gar nicht möglich oder nur mit hohem Aufwand umsetzbar.
- Für eine Aufnahme und Ankopplung der Schneckenwelle des Antriebsmittels für den Notbetrieb muss lediglich die an der aus dem Elektromotor einseitig herausstehenden Motorwelle etwas länger ausgeführt und mit einer Verzahnung versehen werden, die einen Angriffspunkt für die Schneckenwelle bietet. Es ist insbesondere nicht erforderlich, die Motorwelle des Elektromotors auch auf der gegenüberliegenden Längsseite des Elektromotors hervorstehen zu lassen und mit einem Ritzel zu versehen, an dem eine Schneckenwelle dort angreifen könnte.
- Mit Vorteil kann die Verzahnung der Schneckenwelle zu der Verzahnung des Ausgaberitzels korrespondieren, mit dem der Elektromotor das Hohlrad des Getriebes antreibt, und kann mit diesem kämmend in Verbindung gebracht werden. Dann muss kein zweites Zahnradbauteil auf der Motorwelle angeordnet werden, sondern kann es sich um ein Bauteil handeln, welches länger ausgebildet ist, so dass es einerseits als Ausgaberitzel an der Innenverzahnung des Hohlrades angreift, andererseits einen Angriff der Schneckenwelle ermöglicht, also als Schneckenrad agiert. Ein solches Bauteil ist gegenüber zwei getrennt vorzusehenden Zahnradelementen insgesamt preiswerter, zumal zwei getrennt vorzusehende Bauteile in Form von Zahnrädern nicht nur gesondert hergestellt werden müssten, sondern dann auch noch jeweils separat auf die Motorachse gepresst oder geklebt werden müssten. Weiterhin weist ein axial längeres Zahnrad, bzw. eine Schneckenrad den Vorteil einer insgesamt höheren Kraftschlüssigkeit zur Welle auf.
- Im Vergleich zu einer Position am Motorende wirken sich Winkeltoleranzen bei der Montage geringer aus, wodurch die Öffnung zum Einführen des Kopplungsabschnittes in ihrem Durchmesser geringer bemessen werden kann.

Der erfindungsgemäße elektromotorische Klappenantrieb kann mit Vorteil in dem Getriebegehäuse zwei, einander diametral gegenüberliegend angeordnete Öffnungen aufweisen, welche vorzugsweise identisch ausgeführt und jeweils geeignet sind die Lagermittel zur Positionierung und Lagerung des Antriebsmittel zur Notentriegelung aufzunehmen. Ein erstes Lagermittel kann dabei eine Öffnung zur Einführung des Antriebsmittel aufweisen, ein zweites kann ein Ende des Antriebsmittels positionieren und führen und eine Lagerbohrung aufweisen, dessen Größe ungefähr einem Fußkreisdurchmesser der Schneckenwelle des Antriebsmittels entspricht.

Durch die Möglichkeit, das erste und zweite Lagerelement, wahlweise von der einen oder anderen Seite im Getriebeflansch zu platzieren, besteht die Flexibilität die Drehung der Treibstange einer Drehrichtung des Antriebsmittels zur Notentriegelung, je nach Anforderung, zuzuordnen.

Bei dem erfindungsgemäßen elektromotorischen Klappenantrieb kann das Getriebe insbesondere ein Reduktionsgetriebe sein. Hierdurch kann ein gering dimensionierter Elektromotor verwendet werden, der mit hoher Drehzahl, aber geringem Drehmoment arbeitet. Durch die Reduktion der Drehzahl in dem Getriebe wird das Drehmoment soweit gesteigert, dass es für ein Bewegen der Klappe genügt.

Bei dem erfindungsgemäßen elektromotorischer Klappenantrieb kann das Getriebegehäuse mit Vorteil kreiszylinderförmig gebildet sein. Dies trägt zu einer kompakten Bauform des Antriebs bei.

Mit Vorteil können bei dem elektromotorischen Klappenantrieb die Innenverzahnung des Hohlrades und die Außenverzahnung des Antriebsritzels als Schrägverzahnungen ausgebildet sein. Eine solche Ausgestaltung führt zu einer Verringerung der Geräuschentwicklung des Klappenantriebs im Betrieb. Zudem kann somit das Antriebsritzel, wenn es entsprechend verlängert ausgebildet ist, im verlängerten Abschnitt auch die Funktion eines Schneckenrades zur Notentriegelung mittels der Schneckenwelle des Antriebsmittels übernehmen kann.

Bei dem elektromotorischen Klappenantrieb gemäß der Erfindung kann in der Öffnung, bzw. können, wenn wie vorstehend als vorteilhafte Ausgestaltung beschrieben zwei Öffnungen vorgesehen sein, in den Öffnungen jeweils Lagerbuchsen aus einem reibungsarmen Material angeordnet sein, die insbesondere aus einem Kunststoff bestehen können. So kann die Öffnung, bzw. können die Öffnungen sogleich auch ein bzw. die Lagermittel zum Lagern des Kopplungsabschnitts des Antriebsmittels für den Notbetrieb bilden, bzw. bereitstellen.

Bei dem erfindungsgemäßen elektromotorischer Klappenantrieb kann das Hohlrad aus Kunststoff bestehen, vorzugsweise als Kunststoffspritzgussteil ausgeführt sein. Auch dies ist günstig für eine reduzierte Geräuschentwicklung des Klappenantriebs im Betrieb.

Der erfindungsgemäße elektromotorischer Klappenantrieb kann mit Vorteil ein mit der Treibstange gekoppeltes, an einer Klappe der Gebäudeöffnung angreifendes Hebelelement aufweisen. Mit einem solchen Hebelelement, das an einem freien Ende, mit dem es an der Klappe angreift, z.B. ein Gleitelement, wie einen Gleitschieber oder ein Rollelement, aufweisen kann, ist eine Kraftübertragung zum Bewegen der Klappe einfach möglich. An der Treibstange kann insbesondere ein koaxial angeordnetes, vorzugsweise nur teilverzahntes, formschlüssig lös- und befestigbares Zahnrad angeordnet sein, welches seinerseits in eine in dem Hebelelement gebildete, zum Zahnrad passende, teilverzahnte Aussparung eingreift und mittels Hebelführungs- und Befestigungsflansch eine kontrolliert rotierende und begrenzt lineare Bewegung des Hebels ermöglicht.

Wie vorstehend erwähnt kann der erfindungsgemäße elektromotorische Klappenantrieb mit Vorteil in dem Getriebegehäuse zwei, einander diametral gegenüberliegend angeordnete Öffnungen aufweisen, wobei der Kopplungsabschnitt des Antriebsmittels wahlweise durch die eine oder die andere der beiden Öffnungen eingeführt werden kann. Dies ermöglicht, bei entsprechendem Einbau des Klappenantriebs in bzw. an einer Gebäudeöffnung, eine Betätigung der Notbetriebsfunktion sowohl von innen als auch von außen, bezogen auf eine der beiden gegenüberliegenden Seiten der Gebäudeöffnung.

An welcher Seite die Scharniere der Klappe einer Gebäudeöffnung montiert werden, ob die Klappe beim Öffnen nach innen oder außen schwenkt, ob ein oder zwei Antriebe benötigt werden, und ob ein Antrieb achsparallel zu den Scharnieren fluchtend oben oder unten bzw. rechts oder links montiert wird, wird durch bauliche Anforderungen bestimmt. Hieraus ergeben sich zwei unterschiedlich benötigte Drehrichtungen der Treibstange und damit auch des Motorausgaberitzels. Es ergeben sich, wenn ein Hebelelement vorgesehen ist, zudem zwei Ausführungen dieses Hebelelements und von zugeordneten Hebelführflanschen.

Weil ein Drehen des Antriebsmittels zur Notentriegelung in die falsche Richtung den Antrieb zerstören kann und nach einem Auftreten einer solchen Zerstörung auch ein Öffnen der Klappe zum Instandsetzen nicht ohne Zerstörung möglich ist, wodurch wiederum hohe Kosten entstehen können, sollte die Notentriegelung vorzugsweise, unabhängig von der Einbauposition eines Antriebes und Öffnungsrichtung der Klappe, immer in die gleiche Richtung erfolgen. Vorzugsweise wird bei dieser Richtung das Antriebsmittel zur Notentriegelung in den Antrieb hinein gezogen, wobei eine Einziehtiefe wiederum vorzugsweise durch einen Anschlag an einem ersten oder zweiten Lager begrenzt wird.

Weitere Vorteile und Merkmale der Erfindung ergeben sich aus der nachstehenden Beschreibung möglicher Ausführungsformen. Dabei zeigen:
- Fig. 1: eine schematische Ansicht einer mit einer durch einen erfindungsgemäßen Klappenantrieb antreibbaren Klappe verschlossenen Gebäudeöffnung;
- Fig. 2: einen teilweise weggeschnittenen Ausschnitt einer Gebäudeöffnung mit in Offenstellung befindlicher Klappe und einem in der Klappe versteckt liegend angeordneten erfindungsgemäßen Klappenantrieb;
- Fig. 3: eine Ansicht eines zum Antreiben des Klappenantriebs in einem Notbetrieb vorgesehenen Antriebsmittels;
- Fig. 4: eine teilweise weggeschnittene Ausschnittsdarstellung eines erfindungsgemäßen Klappenantriebs mit gekoppeltem Antriebsmittel für den Notbetrieb; und
- Fig. 5: in den Darstellungen a und b zwei Schnittansichten eines erfindungsgemäßen Klappenantriebs mit von jeweils anderer Seite her eingeführtem Antriebsmittel.

In den Figuren sind in schematischen und nicht zwingend maßstabsgetreuen Ansichten Darstellungen möglicher Ausführungsformen eines erfindungsgemäßen elektromotorischen Klappenantriebs mit einem Hilfsantrieb für eine Notbetrieb dargestellt, auch in einer Darstellung in einem Einbau in einer Klappe einer Gebäudeöffnung.

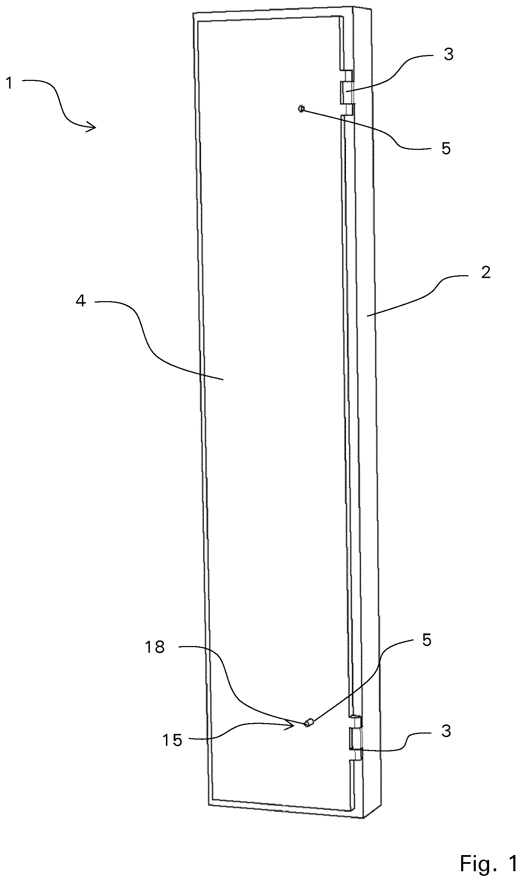

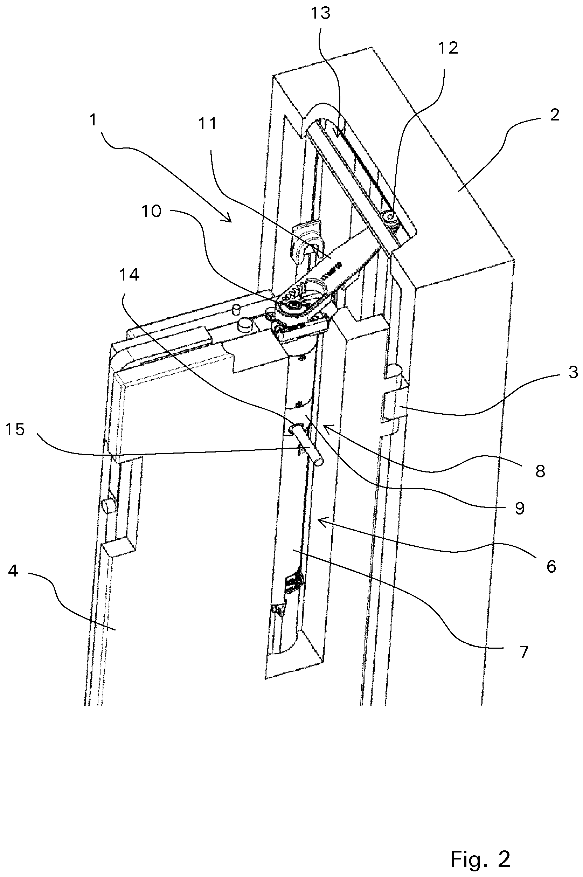

In der Fig. 1 ist in schematischer Darstellung eine Gebäudeöffnung 1 symbolisiert, die von einem Rahmen 2 begrenzt ist. In dem Rahmen 2 ist über Scharniere 3 schwenkbar gelagert eine Klappe 4 angeordnet, die die Gebäudeöffnung 1 in einer wie in Fig. 1 gezeigten Schließstellung verschließt, die die Gebäudeöffnung 1 in einer Offenstellung (vergl. auch Fig. 2) freigeben kann. Es sind in der Fig. 1 zudem Bohrungen 5 zu erkennen, die in die Klappe 4 eingebracht sind und ein Angriffabschnitt 18 eines Antriebsmittels15, deren Funktionen nachstehend noch näher erläutert werden wird.

Bei der Gebäudeöffnung 1 kann es sich zum Beispiel um eine Lüftungsöffnung handeln, die durch eine Lüftungsklappe als Klappe 4 verschlossen, bzw. durch Verschwenken der Lüftungsklappe in eine Offenstellung geöffnet werden kann. Diese Lüftungsöffnung kann senkrecht oder waagerecht in Fassaden eingesetzt werden, insbesondere zur Be- und Entlüftung für die Gebäudeklimatisierung und/oder für einen Rauch- und Wärmeabzug im Brandfalle. Die Lüftungsklappe kann dabei insbesondere als schmaler Drehflügel, Klappflügel oder Kippflügel ausgeführt sein und aus Metall, Holz, und/oder Kunststoff gebildet sein. Solche Lüftungsöffnungen sind dabei typischerweise mit handelsüblichen Beschlagsystemen und Dichtungen ausgestattet für Luftabschluss, um Wärme und Schallübertragung zu verhindern, sowie für einen Einbruchschutz. Die Klappe 4 kann dabei ein Glaselement, z.B. ein opakes oder transluzentes Glaselement aufweisen; auch mehrere Glaselemente sind möglich. Bei schmal gebildeten Klappen wird diese jedoch zumeist ohne ein solches Glaselement gebildet sein, da, bedingt durch die schmale Bauart, dieses sehr klein dimensioniert sein müsste und ein sinnvolles Kosten-Nutzen-Verhältnis nicht einzuhalten wäre.

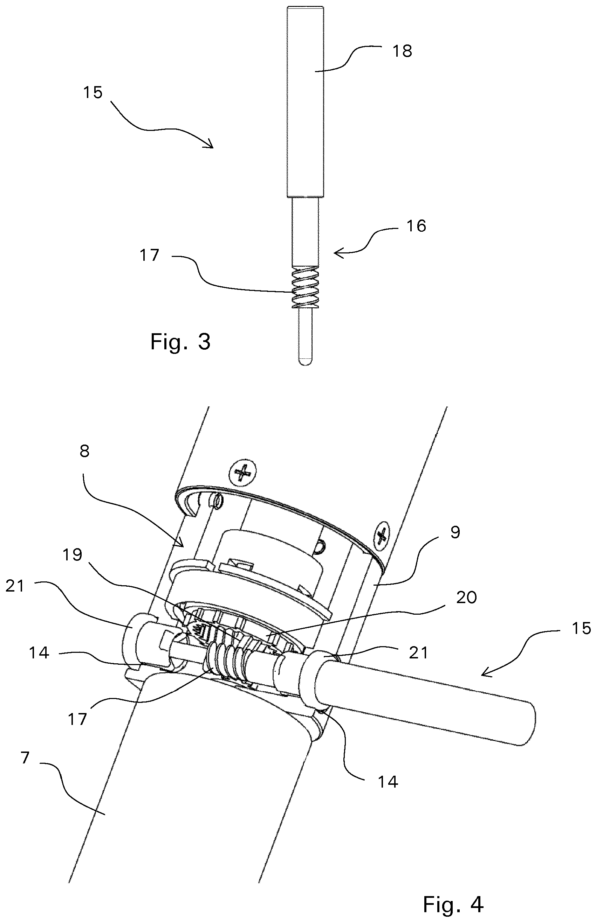

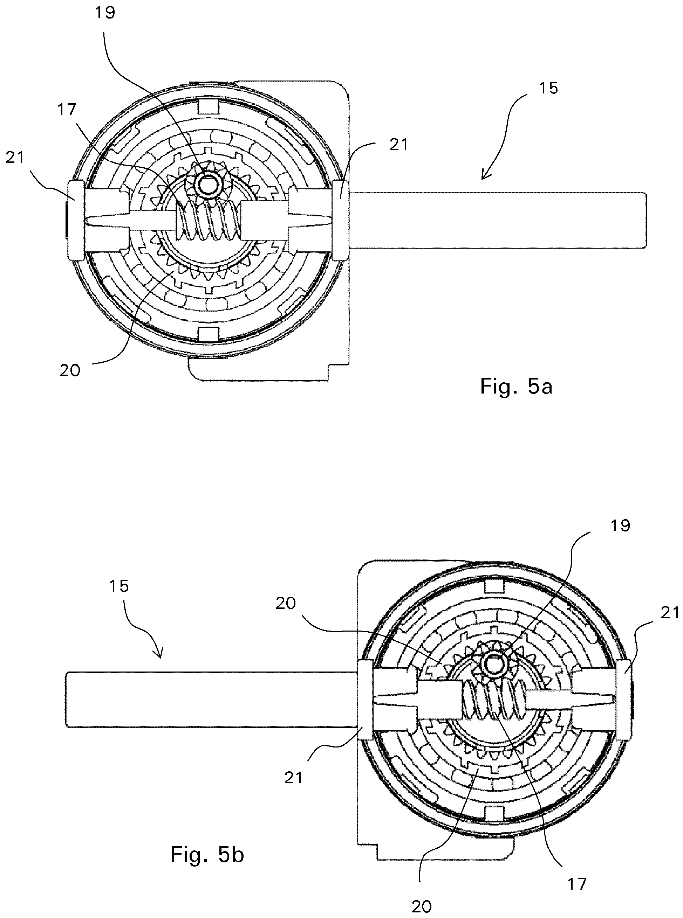

Für ein Betätigen der Klappe 4 ist ein elektromotorischer Klappenantrieb 6 vorgesehen, der insbesondere jedenfalls teilverdeckt in der Klappe 4 angeordnet sein kann. Dieser Klappenantrieb ist in Fig. 2 bis Fig. 5 (a und b) näher zu erkennen.

Der elektromotorische Klappenantrieb 6 hat eine Antriebseinheit, die einen Elektromotor 7 und ein mit diesem gekoppeltes Getriebe 8 aufweist. An dem Getriebe ist ein Abtriebsglied angeschlossen, das insbesondere eine Treibstange 10 mit umfasst.

Der Klappenantrieb 6 kann als Getriebe 8 insbesondere ein Umlaufgetriebe aufweisen. An der Treibstange 10 kann auf einer dem Getriebe 8 abgewandten Stirnseite ein teilverzahntes Zahnrad befestigt sein. Dieses Zahnrad kann beweglich durch Anschläge begrenzt in einer Verzahnungskulisse eines Hebelelements 11 platziert sein. Am Ende des Hebelelements 11 kann ein Gleit- oder Rollelement montiert, z.B. in Form einer Gleitrolle 12, die wiederum in einer in dem Rahmen 2 ausgebildeten Schienennut 13, die die Form einer C-Nut oder, insbesondere bei Rahmen aus Holz- oder Kunststoff einer am Rahmen befestigten separate C-Schiene aufweisen kann, eingreifen kann.

Auf der Abtriebsseite des Getriebes 8 kann an einem Getriebeflansch eine Hebelführungsplatte montiert sein. Über eine solche Hebelführungsplatte kann dann auch eine stirnseitige Befestigung der Antriebseinheit an der Klappe 4 erfolgen.

Eingangsseitig weist das Getriebe 8 ein Hohlrad 20 mit einer Innenverzahnung auf. Dieses Hohlrad 20 kann, wenn das Getriebe 8 als Umlaufgetriebe gebildet ist, insbesondere fluchtend mit einem eingangsseitigen Sonnenrad dieses Umlaufgetriebes wirkverbunden sein.

Der vorzugsweise als, insbesondere bürstenloser, Gleichstrommotor realisierte Elektromotor 7 weist ein an einer Motorwelle axial fluchtend mit der Motorwelle angeordnetes Ausgangsritzel 19 auf, das, passend zur Innenverzahnung des Hohlrades 20, axial versetzt in die Verzahnung des Hohlrades 20 eingreift und das weiterhin, jedenfalls in einem axialen Abschnitt, als Schneckenrad ausgebildet ist.

Die Verwendung eines bürstenloser Gleichstrommotors als Elektromotor 7 hat den Vorteil, dass die Leistungsdichte derartiger Motoren in der Regel meist höher als bei bürstenbehafteten Motoren ist, so dass ein baulich geringer dimensionierter Motor eingesetzt werden kann. Zudem besteht bei Motoren mit Bürsten, wie insbesondere Kohlebürsten, bei geringen Motordrehzahlen, die aus Gründen der Geräuschvermeidung im Betrieb zu bevorzugen sind, die Gefahr, dass sich die Isolationsschlitze am Kommutator durch Kohle- und Kupferpartikel zusetzen und es zu Kurzschlüssen zwischen Polpaaren kommt, welche wiederum zu Fehlfunktionen bzw. Ausfall führen können.

Zur axialen und radialen Positionierung und beweglichen Lagerung des Hohlrades 20 in einem Motorgetriebeflansch, der als ein Teil eines Getriebegehäuses 9 aufgefasst werden kann und der auf der einen Seite mit dem eigentlichen Getriebegehäuse des Getriebes 8 und auf der anderen Seite mit dem Elektromotor 7 verbunden ist, kann zwischen dem Getriebe 8 und dem Elektromotor ein Kugellager platziert sein. In dem Getriebegehäuse 9, hier in dem durch den Motorgetriebeflansch gebildeten Abschnitt sind einander diametral gegenüberliegende Öffnungen 14 eingebracht, in denen Gleitbuchsen 21 angeordnet sind. Durch diese Öffnungen kann ein Kopplungsabschnitt 16 des Antriebsmittels 15 für einen Notbetrieb des Klappenantriebs 4 ohne Rückgriff auf von dem Elektromotor 7 generiertes Drehmoment, also bei Ausfall des Elektromotors 7, eingeführt und dann in den Gleitbuchsen 21 gelagert und positioniert werden. Dabei greift dann eine Schneckenwelle 17, welche auf dem Kopplungsabschnitt angeordnet ist, an dem Ausgaberitzel 19 des Elektromotors 7 an, so dass das Ausgaberitzel 19 über eine Rotation des Antriebsmittels 15 gedreht werden kann, darüber dann das Hohlrad 20 und das Getriebe 8 sowie die daran angeschlossene Treibstange 10. Zum Antreiben des Antriebsmittels 15 kann z.B. ein Akkuschraub- oder -bohrgerät angeschlossen werden, z.B. durch Verbinden mit dem Angriffabschnitt 18 des Antriebsmittels.

Die Schneckenwelle 17 wird mit Vorteil an dem Ausgaberitzel an der Motorwelle angesetzt, da durch die Übersetzung des Getriebes 8 ein geringes Drehmoment erforderlich ist und dadurch die Baugrößen der für den Notbetrieb erforderlichen Komponenten gering sind.

Die Schneckenwelle17 des Antriebsmittels 15 kann mit Vorteil zweigängig ausgeführt sein. Dadurch kann der Durchmesser und damit der Achsabstand zum Schneckenrad 19 und der Achse des Elektromotors 7 geringer ausfallen als bei einer eingängigen Schneckenwelle 17. Weiterhin bietet der resultierende Steigungswinkel die vorteilhafte Verwendbarkeit der Verzahnungsgeometrie des Schneckenrades 19 auch als Ausgaberitzel 19 für den Elektromotor 7, zum Eingriff in das Hohlrad 20. Schließlich wird die Anzahl der erforderlichen Umdrehungen für einen Notbetrieb und wird so Zeit für eine Ausführung des Notbetriebs im Vergleich zu einer eingängigen Schnecke halbiert.

In einen am Motorgetriebeflansch montierten Gehäuse kann zudem eine Motorsteuerelektronik platziert sein, welche am Ende eine Klemmstelle zum Anschluss eines Versorgungskabels aufweist. Die Steuerung kann zudem auch eine zweite Klemmstelle für die Verbindung zu einem weiteren Antrieb sowie ggf. einen Anschluss für einen akustischen Warnsignalgeber aufweisen.

In einem Fehlerfall, also bei einem Ausfall des Elektromotors 7, kann ein Entriegeln und Betätigen der Klappe 4 mittels des Antriebsmittels 15 erfolgen. Falls der Klappenantrieb insbesondere kombiniert auch eine Verriegelung der Klappe mit antreibt, kann es genügen, mit dem Antriebsmittel 15 nur die Verriegelung zu lösen und die Klappe dann von Hand zu öffnen, was aufgrund einer geringen Selbsthemmung des Getriebes 8 möglich ist. Neben einem Notöffnen und ggf. Notentriegeln der Klappe 4 kann auch ein manuelles Notschließen wünschenswert sein. Es sind Szenarien vorstellbar, bei denen ein elektromotorisch angetriebenes Schließen der Klappe 4 mittels des durch den Elektromotor 7 angetriebenen Klappenantriebs 6 nicht möglich ist, aber ein Verschließen und Verriegeln der Klappe 4 erforderlich bzw. gewünscht ist. In diesem Fall kann, wenn das Antriebsmittel 15 entgegengesetzt zu einer Öffnungsrichtung gedreht wird, die Klappe 4 verschlossen und ggf. verriegelt werden. Hierbei ist zu beachten, dass beim Erreichen der Verschlussendlage das maximal eingeleitete Drehmoment nicht überschritten wird, um die Klappe 4 und deren Verriegelung nicht zu beschädigen oder gar zu zerstören.

Bei einem jedenfalls teilverdeckten Einbau des Klappenantriebs 6 in der Klappe 4 sind in der Klappe 4 Bohrungen 5 vorgesehen, die mit den Öffnungen 14 fluchten. Diese Bohrungen 5 können im Normalfall durch Blendkappen verschlossen sein, die für den Fall, dass ein Notbetrieb erfolgen muss, entfernt werden können. Durch diese Bohrungen 5 kann dann das Antriebsmittel 15 eingeführt und mit dem Kopplungsabschnitt 16 in die Öffnungen 14 eingeführt werden, so dass die Schneckenwelle 17 mit dem Ausgaberitzel 19 des Elektromotors 7 kämmt.

Wenn die Bohrungen 5 nicht bereits werkseitig produziert und mit einem Stopfen abgedeckt wurden, ist es nötig, diese Bohrungen 5 im Falle eines erforderlichen Notbetriebs zu setzten. Zum Ermitteln der Position der dann in die Klappe 4 einzubringenden Bohrungen 5 für ein Hindurchragen zu den Öffnungen 14 sind verschiedene Vorgehensweisen möglich. So können bei der Fertigung der Klappe die Bohrpositionen durch eine geringe Spanabnahme an der jeweiligen Bohrposition markiert werden. Es kann eine Bohrlehre mitgeliefert oder einem Monteur mitgegeben und dann verwendet werden. Es kann ein Magnet, z.B. ein Neodym-Magnet, lösbar in einer der Gleitbuchsen 21 eingesetzt werden, wodurch die Bohrposition mittels ferromagnetischen Materials oder eines Magneten ermittelt werden kann.

Eine Positionierung der Schneckenwelle 17 mittig zur Drehachse des Abtriebsglieds, insbesondere der Treibstange ist von Vorteil, da in dem vorzugsweise kreiszylinderförmigen Motorgetriebeflansch, der hier einen Abschnitt des kreiszylinderförmigen Getriebegehäuses 9 darstellt, Raum zur Aufnahme der Gleitbuchsen 21 gegeben ist, bei denen es sich insbesondere um steckbare und selbstverrastende Elementen handeln kann. Zudem können die Öffnungen 14 zum Einführen des Antriebsmittels 15, genauer dessen Kopplungsabschnitts 16, dicht an der zugehörigen Zugangsbohrung 5 in der Klappe 4 platziert sein.

Insbesondere kann eine von einem Lieferanten, z.B. einem Getriebehersteller, vormontierte Motorgetriebeeinheit beim Herstellen des Klappenantriebes mit den Öffnungen 14 versehen und es können die Gleitbuchsen 21 ergänzt werden, die in Abhängigkeit von der vorgesehen Einbauposition des Klappenantriebs (rechts oben/links unten oder links oben/rechts unten) unterschiedlich montiert werden können.

Um eine Geräuschentwicklung des Klappenantriebs 6 im Betrieb gering zu halten, können das Hohlrad 20 und das Ausgaberitzel 19 des Elektromotors 7 schräg verzahnt sein. Ebenfalls aus Gründen der Geräuschminimierung kann das Hohlrad 20 aus Kunststoff bestehen, vorzugsweise als Kunststoffspritzgussteil ausgeführt sein.

### Bezugszeichenliste

- 1: Gebäudeöffnung
- 2: Rahmen
- 3: Scharnier
- 4: Klappe
- 5: Bohrung
- 6: Klappenantrieb
- 7: Elektromotor
- 8: Getriebe
- 9: Getriebegehäuse
- 10: Treibstange
- 11: Hebelelement
- 12: Gleitrolle
- 13: Schienennut
- 14: Öffnung
- 15: Antriebsmittel
- 16: Kopplungsabschnitt
- 17: Schneckenwelle
- 18: Angriffabschnitt
- 19: Ausgaberitzel / Schneckenrad
- 20: Hohlrad
- 21: Gleitbuchse

## Patentansprüche

1. Elektromotorischer Klappenantrieb (6) für Gebäudeöffnungen (1) mit einer einen Elektromotor (7) und ein ein Getriebegehäuse (9) umfassendes Getriebe (8) aufweisenden Antriebseinheit und mit einem von der Antriebseinheit angetriebenen Abtriebsglied, wobei das Abtriebsglied eine um ihre Längsachse rotierende Treibstange (10) umfasst, wobei das Getriebe (8) ein Hohlrad (20) mit einer Innenverzahnung umfasst, welches um eine Drehachse rotiert, die mit der Längsachse der Treibstange (10) zusammenfällt und an dessen Innenverzahnung ein auf einer Motorwelle angeordnetes Ausgaberitzel (19) des Elektromotors (7) angreift, wobei die Motorwelle des Elektromotors (7) und mit ihr das Ausgaberitzel (19) um eine parallel zu der Drehachse des Hohlrads (20) verlaufende, jedoch seitlich versetzt zu dieser liegende Antriebsachse rotiert, wobei der Klappenantrieb (6) ein Antriebsmittel (15) zum alternativen Antreiben des Abtriebsglieds aufweist, welches einen stabförmigen Kopplungsabschnitt (16) aufweist, in dem eine zum Angreifen an einem auf der Motorwelle des Elektromotors (7) angeordneten Zahnradelement ausgebildete Schneckenwelle (17) ausgeformt ist, wobei in dem Getriebegehäuse (9) wenigstens eine Öffnung (14) zum Einführen des Kopplungsabschnitts (16) des Antriebsmittels (15) vorgesehen ist sowie Lagermittel (21) zum Lagern des Kopplungsabschnittes (16) derart, dass dieser um seine Stablängsachse geführt rotieren kann, wobei die Lagermittel (21) derart gebildet und positioniert sind, dass bei in das Getriebegehäuse (9) eingeführtem und von den Lagermitteln (21) gelagertem Kopplungsabschnitt (16) die Stablängsachse die Drehachse schneidet, insbesondere senkrecht schneidet, und dass die Schneckenwelle (17) an dem Zahnradelement kämmend angreift.

2. Elektromotorischer Klappenanatrieb (6) nach Anspruch 1, **dadurch gekennzeichnet, dass** das Zahnradelement zum Angreifen der Schneckenwelle (17) ein Längsabschnitt des Ausgaberitzels (19) ist.

3. Elektromotorischer Klappenanatrieb (6) nach einem der vorhergehenden Ansprüche, **dadurch gekennzeichnet, dass** in dem Getriebegehäuse (9) zwei, einander diametral gegenüberliegend angeordnete Öffnungen (14) vorgesehen sind zum Einführen des Kopplungsabschnitts (16) des Antriebsmittels (15) wahlweise durch die eine oder die andere der beiden Öffnungen (14).

4. Elektromotorischer Klappenantrieb (6) nach Anspruch 3, **dadurch gekennzeichnet, dass** in den Öffnungen (14) keine Lagerbuchsen eingesetzt sind.

5. Elektromotorischer Klappenantrieb (6) nach Anspruch 3, **dadurch gekennzeichnet, dass** nur in einer der Öffnungen (14) eine Lagerbuchse eingesetzt ist.

6. Elektromotorischer Klappenantrieb (6) nach einem der vorhergehenden Ansprüche, **dadurch gekennzeichnet, dass** das Getriebe (8) ein Reduktionsgetriebe ist.

7. Elektromotorischer Klappenantrieb (6) nach einem der vorhergehenden Ansprüche, **dadurch gekennzeichnet, dass** das Getriebegehäuse (9) kreiszylinderförmig gebildet ist.

8. Elektromotorischer Klappenantrieb (6) nach einem der vorhergehenden Ansprüche, **dadurch gekennzeichnet, dass** die Innenverzahnung des Hohlrades (20) und die Außenverzahnung des Antriebsritzels (19) als Schrägverzahnungen ausgebildet sind.

9. Elektromotorischer Klappenantrieb (6) nach einem der vorhergehenden Ansprüche, **dadurch gekennzeichnet, dass** in der Öffnung (14) bzw. in den Öffnungen (14) Lagerbuchsen (21) aus einem reibungsarmen Material, insbesondere aus einem Kunststoff angeordnet sind.

10. Elektromotorischer Klappenantrieb (6) nach einem der vorhergehenden Ansprüche, **dadurch gekennzeichnet, dass** das Hohlrad (20) aus Kunststoff besteht, vorzugsweise als Kunststoffspritzgussteil ausgeführt ist.

11. Elektromotorischer Klappenantrieb (6) nach einem der vorhergehenden Ansprüche, **gekennzeichnet durch** ein mit der Treibstange (10) gekoppeltes, an einer Klappe (4) der Gebäudeöffnung (1) angreifendes Hebelelement (11).

12. Elektromotorischer Klappenantrieb (6) nach Anspruch 11, **dadurch gekennzeichnet, dass** das Hebelelement (11) eine teilverzahnte Aussparung beinhaltet.

## Claims

1. Electric motor-operated flap drive (6) for architectural openings (1), comprising a drive unit comprising an electric motor (7) and a gearbox (8) comprising a gearbox housing (9), and comprising an output member driven by the drive unit, wherein the output member comprises a drive rod (10) rotating about its longitudinal axis, wherein the gearbox (8) comprises a ring gear (20) with internal teeth, which rotates about an axis of rotation that coincides with the longitudinal axis of the drive rod (10) and whose internal teeth are engaged by an output pinion (19) of the electric motor (7) arranged on a motor shaft, wherein the motor shaft of the electric motor (7) and, with it, the output pinion (19) rotates about a drive axis running parallel to the axis of rotation of the ring gear (20) but offset laterally from it, wherein the flap drive (6) comprises a drive means (15) for alternately driving the output member, which comprises a rod-shaped coupling section (16) in which a worm shaft (17) is formed, designed to engage a gear element arranged on the motor shaft of the electric motor (7), wherein the gearbox housing (9) at least one opening (14) is provided for inserting the coupling section (16) of the drive means (15), as well as bearing means (21) for supporting the coupling section (16) in such a way that it can rotate guided about its longitudinal axis, wherein the bearing means (21) are formed and positioned such that, when the coupling section (16) is inserted into the gearbox housing (9) and supported by the bearing means (21), the longitudinal axis of the rod intersects the axis of rotation, in particular intersects it perpendicularly, and that the worm shaft (17) meshes with the gear element.

2. Electric motor-operated flap drive (6) according to claim 1, **characterised in that** the gear element for meshing with the worm shaft (17) is a longitudinal section of the output pinion (19).

3. Electric motor-operated flap drive (6) according to one of the preceding claims, **characterised in that** two openings (14) arranged diametrically opposite one another are provided in the gearbox housing (9) for inserting the coupling section (16) of the drive means (15) optionally through one or the other of the two openings (14).

4. Electric motor-operated flap drive (6) according to claim 3, **characterised in that** no bearing sleeves are fitted in the openings (14).

5. Electric motor-operated flap drive (6) according to claim 3, **characterised in that** a bearing bush is inserted in only one of the openings (14).

6. Electric motor-operated flap drive (6) according to one of the preceding claims, **characterised in that** the gearbox (8) is a reduction gearbox.

7. Electric motor-operated flap drive (6) according to one of the preceding claims, **characterised in that** the gearbox housing (9) is of circular cylindrical shape.

8. Electric motor-operated flap drive (6) according to one of the preceding claims, **characterised in that** the internal teeth of the hollow gear (20) and the external teeth of the drive pinion (19) are helical.

9. Electric motor-operated flap drive (6) according to one of the preceding claims, **characterised in that** bearing bushes (21) made of a low-friction material, in particular a plastic, are arranged in the opening (14) or in the openings (14).

10. Electric motor-operated flap drive (6) according to one of the preceding claims, **characterised in that** the ring gear (20) consists of plastic, preferably being designed as a plastic injection-moulded part.

11. Electric motor-operated flap drive (6) according to one of the preceding claims, **characterised by** a lever element (11) coupled to the drive rod (10) and engaging a damper (4) of the building opening (1).

12. Electric motor-operated flap drive (6) according to claim 11, **characterised in that** the lever element (11) comprises a partially toothed recess.

## Revendications

1. Commande de volet (6) actionné par un moteur électrique pour ouvertures de bâtiments (1), comprenant une unité de commande comprenant un moteur électrique (7) et un réducteur (8) comprenant un carter de réducteur (9), et comprenant un organe de sortie entraîné par l'unité de commande, dans lequel l'organe de sortie comprend une tige de commande (10) tournant autour de son axe longitudinal, dans lequel le réducteur (8) comprend une couronne dentée (20) à denture intérieure, qui tourne autour d'un axe de rotation coïncidant avec l'axe longitudinal de la tige de commande (10) et dont la denture intérieure est en prise avec un pignon de sortie (19) du moteur électrique (7) disposé sur un arbre moteur, dans lequel l'arbre moteur du moteur électrique (7) et, avec lui, le pignon de sortie (19) tournent autour d'un axe de commande s'étendant parallèlement à l'axe de rotation de la couronne dentée (20) mais décalé latéralement par rapport à celui-ci, dans lequel la commande de volet (6) comprend un moyen de commande (15) pour entraîner alternativement l'organe de sortie, qui comprend une section d'accouplement en forme de tige (16) dans laquelle est formé un arbre à vis sans fin (17), conçu pour s'engrener avec un élément d'engrenage disposé sur l'arbre moteur du moteur électrique (7), dans lequel le carter de boîte de vitesses (9) est muni d'au moins une ouverture (14) pour l'insertion de la section d'accouplement (16) du moyen de commande (15), ainsi que des moyens de palier (21) destinés à supporter la section d'accouplement (16) de telle sorte qu'elle puisse tourner en étant guidée autour de son axe longitudinal, les moyens de palier (21) étant formés et positionnés de telle sorte que, lorsque la section d'accouplement (16) est insérée dans le carter de boîte de vitesses (9) et supportée par les moyens de palier (21), l'axe longitudinal de la tige coupe l'axe de rotation, en particulier le coupe perpendiculairement, et que l'arbre à vis sans fin (17) engrène avec l'élément d'engrenage.

2. Commande de volet (6) à moteur électrique selon la revendication 1, **caractérisé en ce que** l'élément d'engrenage destiné à s'engrener avec l'arbre à vis sans fin (17) est une section longitudinale du pignon de sortie (19).

3. Commande de volet (6) à moteur électrique selon l'une des revendications précédentes, **caractérisé en ce que** deux ouvertures (14) disposées diamétralement opposées l'une à l'autre prévues dans le carter de boîte de vitesses (9) pour insérer la section d'accouplement (16) du moyen de commande (15) au choix à travers l'une ou l'autre des deux ouvertures (14).

4. Commande de volet (6) à moteur électrique selon la revendication 3, **caractérisé en ce qu'**aucune douille de palier n'est montée dans les ouvertures (14).

5. Commande de volet (6) à moteur électrique selon la revendication 3, **caractérisé en ce qu'**une douille de palier est insérée dans une seule des ouvertures (14).

6. Commande de volet (6) à moteur électrique selon l'une des revendications précédentes, **caractérisé en ce que** le réducteur (8) est un réducteur à engrenages.

7. Commande de volet (6) à moteur électrique selon l'une des revendications précédentes, **caractérisé en ce que** le carter de boîte de vitesses (9) a une forme cylindrique circulaire.

8. Commande de volet (6) à moteur électrique selon l'une des revendications précédentes, **caractérisé en ce que** les dents internes de la roue dentée creuse (20) et les dents externes du pignon de commande (19) sont hélicoïdales.

9. Commande de volet (6) à moteur électrique selon l'une des revendications précédentes, **caractérisé en ce que** des douilles de palier (21) en un matériau à faible frottement, en particulier en plastique, sont disposées dans l'ouverture (14) ou dans les ouvertures (14).

10. Commande de volet (6) à moteur électrique selon l'une des revendications précédentes, **caractérisé en ce que** la couronne dentée (20) est en plastique, de préférence conçue comme une pièce moulée par injection en plastique.

11. Commande de volet (6) à moteur électrique selon l'une des revendications précédentes, **caractérisé par** un élément de levier (11) couplé à la tige de commande (10) et venant en prise avec un amortisseur (4) de l'ouverture du bâtiment (1).

12. Commande de volet (6) à moteur électrique selon la revendication 11, **caractérisé en ce que** l'élément de levier (11) comprend un évidement partiellement denté.
